# EUROPÄISCHE PATENTSCHRIFT

(11) **EP 1 171 986 B1**
(45) Veröffentlichungstag und Bekanntmachung des Hinweises auf die Patenterteilung: **12.07.2006**
(21) Anmeldenummer: 00909279.2
(22) Anmeldetag: 01.03.2000
(51) Int. Cl.: H04L 29/08, G06F 13/42

(54) **DATENÜBERTRAGUNGSEINRICHTUNG**
DATA COMMUNICATION EQUIPMENT
EQUIPEMENT DE TRANSMISSION DE DONNEES

(30) Priorität: 19.04.1999 DE 19917576
(43) Veröffentlichungstag der Anmeldung: 16.01.2002
(73) Patentinhaber: Moeller GmbH, 53115 Bonn (DE)
(72) Erfinder: CULCA, Horea-Stefan, 53797 Lohmar (DE)
(86) Internationale Anmeldenummer: PCT/EP2000/001745
(87) Internationale Veröffentlichungsnummer: WO 2000/064125

(56) Entgegenhaltungen:
- EP-A- 0 415 551
- US-A- 4 308 579
- US-A- 5 056 113
- US-A- 5 343 503
- US-A- 5 566 320

## Beschreibung

Die Erfindung betrifft eine Datenübertragungseinrichtung nach dem Oberbegriff des Anspruchs 1 und ein Verfahren zur Datenübertragung.

Für eine serielle synchrone Datenübertragung zwischen zwei Teilnehmern werden mindestens eine Datenleitung für eine bidirektionale Datenübertragung und eine Taktsignalleitung oder zwei Datenleitungen für eine unidirektionale Datenübertragung und eine Taktsignalleitung benötigt. Von besonderer Bedeutung ist hier die Taktsignalleitung, die den gesamten Signalfluß zwischen den Teilnehmern steuert. Dieses Taktsignal wird von einem Mastergerät erzeugt. Ein mit dem Mastergerät kommunizierendes Slavegerät muß sich diesem vorgegebenen Takt anpassen.

Bekannte Schnittstellen für diese seriellen synchronen Übertragungsarten sind: I²C (Philips), SPI (Motorola), Microwire (National Semiconductor) oder dergleichen. Diese Schnittstellen werden in der Regel für die Datenübertragung zwischen verschiedenen Bauteilen innerhalb eines Gerätes eingesetzt.

Soll eine solche serielle synchrone Datenübertragung zwischen einzelnen Geräten realisiert werden, sind Maßnahmen bezüglich gegebenenfalls auftretender Störsignale vorzusehen. Um insbesondere die Taktsignalleitung vor Störeinflüssen zu schützen, werden üblicherweise Hardware-Entstörmaßnahmen in Form von Filtern und Abschirmungen vorgesehen. In manchen Fällen wird die Störsicherheit durch zusätzliche Software-Entstörmaßnahmen unterstützt. Derartige Software-Entstörmaßnahmen werden in der Regel durch wiederholtes Lesen der eingegangenen Informationen realisiert. Hierfür werden die Informationen in zeitlichen Abständen von zirka 5 bis 20 µs (durchschnittliche Dauer der Störeinflüsse) wiederholt gelesen und durch eine Mehrheitsentscheidung (mehrheitlich gelesene Signale werden als richtige Signale gewertet) ausgewertet. Um die Störsicherheit bei dieser Art der Entstörung zu erhöhen, wird die Anzahl der Lesevorgänge erhöht.

Nachteilig bei der Entstörung mittels Hardware ist der relativ hohe Aufwand für Hardware. Ferner ist die digitale Softwareentstörung nur unzureichend, da lediglich das Mastergerät, welches ja das Taktsignal erzeugt, wiederholte Lesevorgänge durchführen kann, indem es für die erforderliche (Prüf-)Lesezeit das Taktsignal verzögert bzw. anhält.

Aus der US-A 5 056 113 und US-A 5 343 503 sind Einrichtungen zur seriellen synchronen Datenübertragung bekannt geworden.

In der Einrichtung aus US-A 5 056 113 sind Master- und Slaveschnittstellen derart ausgebildet, dass über eine zusätzliche Quittierungsleitung Quittierungssignale übertragbar sind.

Die Datenübertragungseinrichtung der US-A 5 343 503 ist vomehmlich als Bussystem ausgestaltet, auf dem unter anderem auch Quittierungssignale über zwei zusätzliche Leitungen generiert werden. Dabei zeigen Sender und Empfänger im Handshake-Verfahren ihre gegenseitige Empfangs- bzw. Sendebereitschaft an. Es sind somit jeweils Sender und Empfänger aktiv.

In beiden Einrichtungen wird die Datenübertragung vom Master überwacht und gesteuert. Darin liegt ein Nachteil in Bezug auf Entstörmaßnahmen, weil der Master vom Slave keine Rückmeldung erfährt, wenn dort ein Fehl-Empfang stattgefunden hat.

Der Erfindung liegt daher die Aufgabe zugrunde, eine Datenübertragungseinrichtung und ein Verfahren zu schaffen, bei denen mit einfachen Mitteln die Störsicherheit bei einer seriellen Datenübertragung deutlich erhöht wird.

Die Aufgabe wird erfindungsgemäß durch die kennzeichnenden Merkmale der nebengeordneten Ansprüche gelöst, während den abhängigen Ansprüchen vorteilhafte Weiterbildungen der Erfindung zu entnehmen sind.

Durch die zusätzliche Quittierungsleitung ist das Slavegerät erfindungsgemäß in der Lage, das Mastergerät zu informieren, daß es die übermittelten Daten erhalten hat und die Verarbeitung der Daten sowie die entsprechende Entstörmaßnahme abgeschlossen sind. Das Mastergerät wird keine erneute Operation, an der dieser Slave beteiligt ist, einleiten, bis es das Quittierungssignal vom Slavegerät erhalten hat. Durch diese erfindungsgemäße Ausbildung hat auch das Slavegerät die Möglichkeit, ausreichend lange empfangene Signale zu entstören.

Weitere Einzelheiten und Vorteile der Erfindung ergeben sich aus dem folgenden, anhand von Figuren erläuterten Ausführungsbeispiel. Es zeigen
- Figur 1:: eine Datenübertragungseinrichtung - bestehend aus einem Mastergerät und einem Slavegerät - gemäß der Erfindung in schematischer Darstellung; und
- Figur 2:: ein Übertragungsprotokoll für die serielle synchrone Datenübertragung zwischen zwei Teilnehmern gemäß Figur 1.

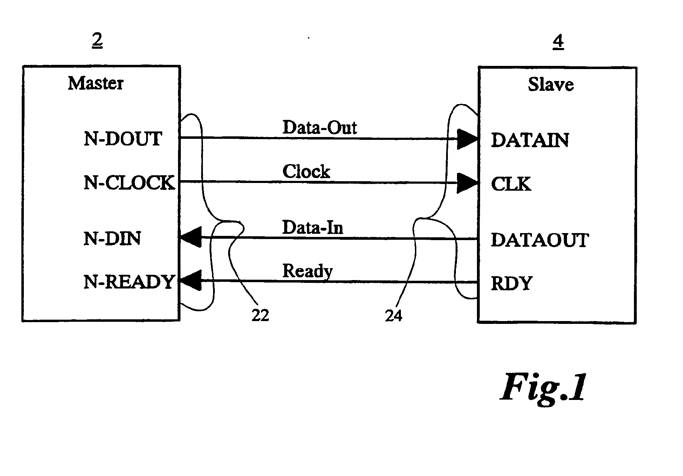

Fig. 1 zeigt eine Geräteanordnung bestehend aus einem Mastergerät 2 und einem Slavegerät 4, die zum Zwecke des Datenaustauschs über ihre Datenübertragungsschnittstellen, Masterschnittstelle 22 und Slaveschnittstelle 24, miteinander verbunden sind. Zum Zwecke der Kommunikation weisen beide Geräte eine Intelligenz in Form einer eigenen Recheneinheit (z.B. Mikroprozessor oder Controller) auf.

In einer bevorzugten Ausführungsform sind zumindest eine Datenübertragungsleitung (Data-Out), zur Übertragung von Daten vom Masterzum Slavegerät 2, 4, eine Datenübertragungsleitung (Data-In) zur Übertragung von Daten vom Slave- zum Mastergerät 4, 2, eine Taktsignalleitung (Clock) und eine erfindungsgemäße Quittierungsignalsleitung (Ready) zur Sendung eines Quittierungssignals vom Slave- zum Mastergerät 4, 2 vorhanden. Die Schnittstellen von Master- und Slavegerät 2, 4 weisen entsprechende Anschlußkontakte auf, wobei in dem dargestellten Ausführungsbeispiel die Signaleingänge des Mastergerätes 2 vorzugsweise invertiert sind. Ist nur eine Datenübertragungsleitung, bzw. nur jeweils ein Datenübertragungsanschluß je Teilnehmer, vorhanden muß diese/dieser für einen bidirektionalen Betrieb geeignet sein. Im dargestellten Ausführungsbeispiel sind zwei Datenübertragungsleitungen (Data-Out, Data-In) vorhanden. Hierbei handelt es sich um Datenübertragungsleitungen für einen unidirektionalen Betrieb; eine ungewollte Überlagerung von Daten bei gleichzeitiger Sendung von Daten der beiden Teilnehmer kann so ausgeschlossen werden. Durch die erfindungsgemäße Ausführung einer Quittierungssignalleitung (Ready) ist das Slavegerät 4 nunmehr in der Lage das Mastergerät 2 zu informieren, daß die Verarbeitung empfangener Daten und deren Überprüfung (mittels Entstörmaßnahme z.B. Mehrfachlesen und anschließende Mehrheitsentscheidung) abgeschlossen ist und das Slavegerät 4 nunmehr bereit ist für einen weiteren Datenempfang. Das Mastergerät 2 wird somit keine neue Operation starten (an welcher das aktive Slavegerät 4 beteiligt wäre) bevor es die Quittierung durch das Ready-Signal vom Slavegerät 4 erhält. Auf diese Weise ist auch das Slavegerät 4 in der Lage über eine ausreichend lange Zeit Signale zu entstören.

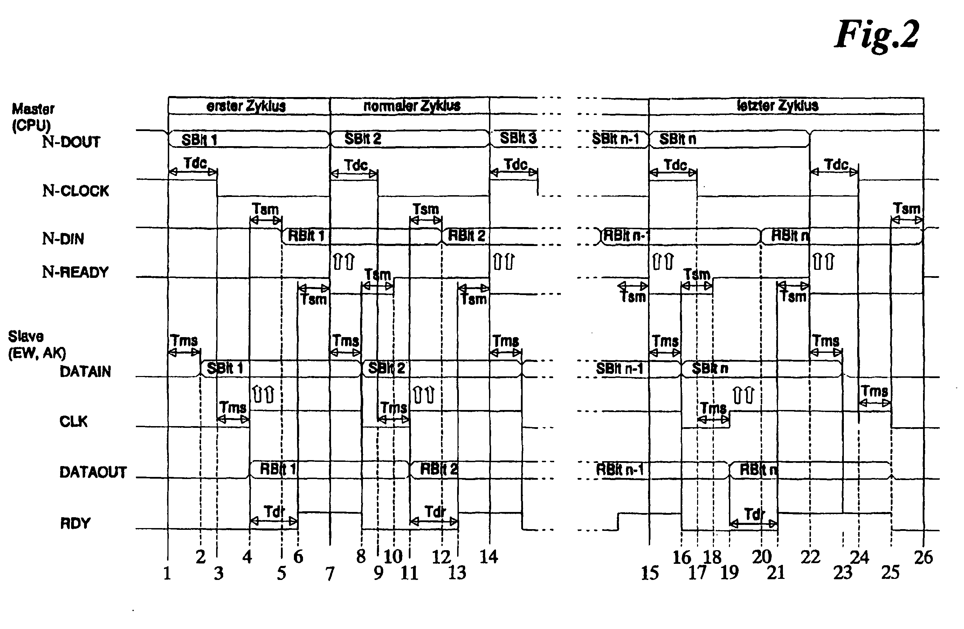

Im folgenden wird das Übertragungsprotokoll für die serielle synchrone Kommunikation zwischen Master- und Slavegerät 2, 4 an Hand der Figur 2 erläutert.
In der nachfolgenden Beschreibung und in der Figur 2 werden die Signale mit den jeweiligen Anschlußbezeichnungen der Schnittstellen von Master- und Slavegerät bezeichnet. Bei den Signalen des Masters: N-DOUT, N-CLOCK, N-DIN, N-READY handelt es sich bei dem dargestellten und beschriebenen Ausführungsbeispiel um negierte Signale (aktiv low).

| Zeitpunkt | Master | Slave |
|---|---|---|
| 1 | initiiert die Kommunikation (den ersten Zyklus), indem er das erste Sende-Bit (SBit 1) auf die N-DOUT-Leitung platziert | |
| 2 | | erhält das SBit 1 als DATAIN nach der entsprechenden Übertragungsverzögerung Master-Slave, Tms |
| 3 | aktiviert nach der notwendigen Clock-Verzögerung Tdc den N-CLOCK | |
| 4 | | nach der Übertragungszeit Tms bekommt der Slave ein Interrupt von der CLK-Leitung. Er trifft sodann die folgenden Maßnahmen: |
| | | a) Setzt das erste Receive-Bit (RBit 1) auf DATAOUT |
| | | b) liest mit Entstörung (mehrmals lesen und vergleichen) das SBit1 von der Leitung DATAIN. Falls nötig wird länger entstört, was zu einer Verlängerung der Tdr-Verzögerung führen kann |
| 5 | bekommt RBit 1 nach der Übertragungsverzögerung Slave-Master Tsm | |
| 6 | | aktiviert nach der notwendigen Tdr-Verzögerung die RDY-Leitung |
| 7 | bekommt das N-READY-Signal nach der Übertragungsverzögerung Tsm und: | |
| | a) deaktiviert das N-CLOCK-Signal | |
| | b) Setzt das nächste S-Bit auf N-DOUT (initiiert einen neuen Zyklus) | |
| | c) liest mit Entstörung (mehrmals lesen und vergleichen) das RBit1 von der Leitung N-DIN. Falls nötig wird länger entstört, was zu einer Verlängerung der Tdc-Verzögerung führen kann | |
| 8 | | erhält nach der entsprechenden Übertragungsverzögerung Master-Slave Tms das S-Bit 2 als DATAIN und das deaktivierte CLK-Signal; deaktiviert demzufolge auch RDY |
| 9 | aktiviert das N-CLOCK-Signal nach der notwendigen Clock-Verzögerung Tdc (kann durch entstörtes Lesen verlängert werden) | |
| 10 | N-READY wird nach der Übertragungsverzögerung Tsm inaktiv | |
| 11 | | bekommt nach der Übertragungsverzögerung Tms das aktivierte CLK-Signal und: |
| | | a) Setzt das nächste R-Bit auf DATAOUT |
| | | b) liest mit Entstörung (mehrmals lesen und vergleichen) das S-Bit von der Leitung DATAIN. Falls nötig wird länger entstört, was zu einer Verlängerung der Tdr-Verzögerung führen kann |
| 12 | nach der Übertragungsverzögerung Tsm kommt das RBit an | |
| 13 | | aktiviert RDY nach der notwendigen Ready-Verzögerung Tdr (kann durch entstörtes Lesen verlängert werden) |
| 14 | bekommt das N-READY-Signal nach der Übertragungsverzögerung Tsm und: | |
| | a) deaktiviert das N-CLOCK-Signal | |
| | b) Setzt das nächste SBit auf N-DOUT (initiiert den nächsten | |
| | Zyklus) c) liest mit Entstörung ...... | |
| ... | die Schritte 7 - 13 werden bis zum vorletzten Zyklus wiederholt. | dadurch werden die Bits 2 .. n-1 übertragen |
| 15 | initiiert den letzten Zyklus, indem er das letzte Sende-Bit (SBit n) auf die N-DOUT-Leitung platziert. Deaktiviert N-CLOCK und liest mit Entstörung das RBit n-1 | |
| 16 | | erhält nach der entsprechenden Übertragungsverzögerung Master-Slave Tms das S-Bit n auf DATAIN und das deaktivierte CLK-Signal; deaktiviert demzufolge auch RDY |
| 17 | aktiviert N-CLOCK nach der notwendigen Clock-Verzögerung Tdc (kann durch entstörtes Lesen verlängert werden) | |
| 18 | N-READY wird nach der Übertragungsverzögerung Tsm inaktiv | |
| 19 | | bekommt nach der Übertragungsverzögerung Tms das aktivierte CLK-Signal und: |
| | | a) Setzt das letzte RBit n auf DATAOUT |
| | | b) liest mit Entstörung (mehrmals lesen und vergleichen) das letzte S-Bit n von der Leitung DATAIN. Falls nötig wird länger entstört, was zu einer Verlängerung der Tdr-Verzögerung führen kann |
| 20 | erhält das RBit n nach der Übertragungsverzögerung Tsm | |
| 21 | | aktiviert RDY nach der notwendigen Ready-Verzögerung Tdr (kann durch entstörtes Lesen verlängert werden) |
| 22 | bekommt das N-READY-Signal nach der Übertragungsverzögerung Tsm und: | |
| | a) Setzt die Leitung N-DOUT auf Ruhepegel ('high') | |
| | c) liest mit Entstörung (mehrmals lesen und vergleichen) das R-Bit1von der Leitung N-DIN. Falls nötig wird länger entstört, was zu einer Verlängerung der Tdc-Verzögerung führen kann (!N-CLOCK wird noch nicht deaktiviert) | |
| 23 | | nach der Übertragungsverzögerung Tms wird die Leitung DATAIN inaktiv ('low'). |
| 24 | CLOCK wird nach dem Lesen von RBIT n deaktiviert; damit wird der Slave über das Beenden des RBIT n -Lesevorgangs informiert; in diesem Fall deckt Tdc nur das entstörte Lesen ab und kann somit kürzer sein als sonst | |
| 25 | | CLK wird nach der Übertragungsverzögerung Tms inaktiv, damit wird RDY deaktiviert und die Leitung DATAOUT freigesetzt ('low') |
| 26 | nach der Übertragungsverzögerung Tsm wird N-READY inaktiv und N-DIN frei ('high'). Der Master kann jetzt die Übertragung eines neuen Telegramms starten. | |

| | | |
|---|---|---|
| Tdc: Clock-Verzögerung beim Mastergerät | | |
| Tdr: Verzögerung des Quittierungssignals "RDY" beim Slavegerät | | |
| Tms: Verzögerung der Signale bei der Übertragung vom Master- zum Slavegerät | | |
| Tsm: Verzögerung der Signale bei der Übertragung vom Slave- zum Mastergerät | | |

Die vorliegende Erfindung ist nicht auf die vorstehend beschriebenen Ausführungsformen beschränkt, sondern umfaßt auch alle im Sinne der Erfindung gleichwirkenden Ausführungsformen. Die Erfindung umfaßt femer ein Slavegerät 4 mit einer Slaveschnittstelle 24 mit einem Quittierungsanschluß (RDY) und mit einer Recheneinheit (Mikroprozessor oder Controller) die derart ausgebildet ist, daß nach Beendigung eines Datenlesevorgangs ein Quittierungssignal für das Mastergerät 2 an dem Quittierungsanschluß (RDY) der Slaveschnittstelle 24 erzeugbar ist. Desweiteren umfaßt die Erfindung ein Mastergerät 2 mit einer Masterschnittstelle 22 mit einem Quittierungsanschluß (N-READY) und mit einer Recheneinheit, die derart ausgebildet ist, daß erst nach Erhalt eines Quittierungssignals vom Slavegerät 4 ein weiterer Schreibvorgang an das Slavegerät 4 initiierbar ist.

## Patentansprüche

1. Datenübertragungseinrichtung zur seriellen synchronen Datenübertragung,
- mit einem Mastergerät (2) umfassend eine Recheneinheit und eine Masterschnittstelle (22),
und
- mit einem Slavegerät (4) umfassend eine Recheneinheit und eine Slaveschnittstelle (24),
- wobei Master- und Slaveschnittstelle (22, 24) über mindestens eine Datenübertragungsleitung und eine Taktsignalleitung verbindbar sind, und
- Master- und Slaveschnittstelle (22, 24) derart ausgebildet sind, dass sie über eine zusätzliche Quittierungssignalleitung (Ready) für die Übertragung eines Quittierungssignals vom Slave- zum Mastergerät (4, 2) verbindbar sind,
- die Recheneinheit des Slavegerätes (4) derart ausgebildet ist, dass nach Beendigung eines Datenlesevorgangs das Quittierungssignal für das Mastergerät (2) erzeugbar ist,
**dadurch gekennzeichnet, dass** die Recheneinheit des Slavegeräts (4) derart ausgebildet ist,
• dass ein aus einem Bit bestehendes Datensignal (RBit) und nach einem Datenlesevorgang und nach Beendigung eines Entstörvorgangs ein Quittierungssignal (RDY) für das Mastergerät (2) an dem Quittierungsanschluss der Slaveschnittstelle (24) erzeugbar ist und
• dass die Recheneinheit des Mastergerätes (2) derart ausgebildet ist,
• dass nach Erhalt des Quittierungssignals (RDY) vom Slavegerät (4) und Beendigung eines Entstörvorgangs vom Mastergerät (2) ein weiterer Sendevorgang an das Slavegerät (4) initiierbar ist.

2. Datenübertragungseinrichtung nach Anspruch 1, **dadurch gekennzeichnet, daß** genau eine bidirektionale Datenübertragungsleitung vorhanden ist.

3. Datenübertragungseinrichtung nach Anspruch 1, **dadurch gekennzeichnet, daß** zwei unidirektionale Datenübertragungsleitungen (Data-Out, Data-In) vorhanden sind.

4. Verfahren zur seriellen synchronen Datenübertragung,
- mit einer Datenübertragungseinrichtung mit einem Mastergerät (2) umfassend eine Recheneinheit und eine Masterschnittstelle (22), und mit einem Slavegerät (4) umfassend eine Recheneinheit und eine Slaveschnittstelle (24), wobei Master- und Slaveschnittstelle (22, 24) über zwei unidirektionale Datenübertragungsleitungen (Data-In; Data-Out), eine Quittierungssignalleitung (Ready) und eine Taktsignalleitung (Clock) verbunden sind, mit folgenden Verfahrensschritten:
- (1) Master initiiert die Kommunikation, indem er ein erstes Sendebit (SBit1) sendet,
- (2) Slave erhält erstes Sendebit (SBit1) nach einer Master-Slave-Übertragungsverzögerung (Tms),
- (3) Master aktiviert nach Taktsignal-Verzögerungszeit (Tdc) das Taktsignal (N-CLOCK),
- (4) Slave bekommt daraufhin nach Master-Slave-Übertragungsverzögerung (Tms) ein Interruptsignal von der Taktsignalleitung (Clock, CLK), sendet ein erstes Empfangsbit (RBit1) und liest nach Anwendung einer Entstörmaßnahme erstes Sendebit (SBit1),
- (5) Master empfängt nach Slave-Master-Übertragungsverzögerung (Tsm) erstes Empfangsbit (RBit1),
- (6) Slave aktiviert nach Verzögerungszeit (Tdr) sein Quittierungssignal (RDY),
- (7) Master empfängt nach Slave-Master-Übertragungsverzögerung (Tsm) das Quittierungssignal (N-READY), deaktiviert das Taktsignal (N-CLOCK), initiiert einen neuen Zyklus durch Senden des nächsten Sendebits (SBit2) und liest nach Anwendung einer Entstörmaßnahme das Empfangsbit (RBit1),
- (8) Slave erhält nach einer Master-Slave-Übertragungsverzögerung (Tms) nächstes Sendebit (SBit2) sowie das deaktivierte Taktsignal (RDY),
- (9) Master aktiviert nach Taktsignalverzögerungszeit (Tdc) das Taktsignal (N-CLOCK)
- (10) Master setzt nach Slave-Master-Übertragungsverzögerung (Tsm) das Quittierungssignal (N-READY) inaktiv,
- (11) Slave empfängt nach Master-Slave-Übertragungsverzögerung (Tms) das aktive Taktsignal (CLK), sendet nächstes Empfangsbit (RBit2) und liest nach Anwendung einer Entstörmaßnahme Sendebit (SBit2),
- (12) Master empfängt nach Slave-Master-Übertragungsverzögerung (Tsm) Empfangsbit (RBit2),
- (13) Slave aktiviert nach Verzögerungszeit (Tdr) sein Quittierungssignal (RDY),
- (14) Master empfängt nach Slave-Master-Übertragungsverzögerung (Tsm) das Quittierungssignal (N-READY), deaktiviert das Taktsignal (N-CLOCK), sendet nächstes Sendebit (SBit3) und liest nach Anwendung einer Entstörmaßnahme Empfangsbit (RBit2),
- Wiederholung der Schritte (7) - (13) bis zum vorletzten Zyklus,
- (15) Master initiiert letzten Zyklus, indem er letztes Sendebit (SBitn) sendet, und deaktiviert das Taktsignal (N-CLOCK) und liest nach Anwendung einer Entstörmaßnahme Empfangsbit (Rbitn-1) des vorangegangenen Zyklus,
- (16) Slave erhält nach einer Master-Slave-Übertragungsverzögerung (Tms) letztes Sendebit (SBitn) sowie das deaktivierte Taktsignal (CLK),
- (17) Master aktiviert nach Taktsignalverzögerungszeit (Tdc) das Taktsignal (N-CLOCK)
- (18) Master setzt nach Slave-Master-Übertragungsverzögerung (Tsm) das Quittierungssignal (N-READY) inaktiv,
- (19) Slave empfängt nach Master-Slave-Übertragungsverzögerung (Tms) das aktivierte Taktsignal (CLK), sendet letztes Empfangsbit (RBitn) und liest nach Anwendung einer Entstörmaßnahme letztes Sendebit (SBitn),
- (20) Master empfängt nach Slave-Master-Übertragungsverzögerung (Tsm) letztes Empfangsbit (RBitn),
- (21) Slave aktiviert nach Verzögerungszeit (Tdr) sein Quittierungssignal (RDY),
- (22) Master empfängt nach Slave-Master-Übertragungsverzögerung (Tsm) das Quittierungssignal (N-READY), versetzt das Taktsignal (N-CLOCK) in einen inaktiven Ruhepegel und liest nach Anwendung einer Entstörmaßnahme letztes Empfangsbit (RBitn),
- (23) Slave setzt nach Master-Slave-Übertragungsverzögerung (Tms) seine Übertragungsleitung (DATAIN) inaktiv,
- (24) Master deaktiviert Taktsignal (N-CLOCK) nach Lesen des letzten Empfangsbits (RBitn),
- (25) Slave deaktiviert Taktsignal (CLK) nach Master-Slave-Übertragungsverzögerung (Tms),
- (26) Master deaktiviert nach Slave-Master-Übertragungsverzögerung (Tsm) sein Quittierungssignal (N-READY).

## Claims

1. Data communication equipment for serial synchronous data communication,
- having a master device (2) comprising an arithmetic and logic unit and a master interface (22), and
- having a slave device (4) comprising an arithmetic and logic unit and a slave interface (24),
- wherein the master and slave interfaces (22, 24) may be connected via at least one data transmission line and one clock signal line, and
- the master and slave interfaces (22, 24) are so designed that they may be connected via an additional acknowledge signal line (Ready) for transmission of an acknowledge signal from the slave to the master device (24, 22),
- the arithmetic and logic unit of the slave device (24) is so designed that, after completion of a data read process, the acknowledge signal may be generated for the master device (2),
**characterised in that** the arithmetic and logic unit of the slave device (4) is so designed that,
• a data signal (RBit) consisting of one bit and, after a data read process and after completion of an interference suppression process, an acknowledge signal (RDY) may be generated for the master device (2) at the acknowledge terminal of the slave interface (24) and
• the arithmetic and logic unit of the master device (2) is so designed that,
• after receipt of the acknowledge signal (RDY) from the slave device (4) and completion of an interference suppression process by the master device (2), a further transmission process to the slave device (4) may be initiated.

2. Data communication equipment according to claim 1, **characterised in that** precisely one bidirectional data transmission line is present.

3. Data communication equipment according to claim 1, **characterised in that** two unidirectional data transmission lines (Data-Out, Data-In) are present.

4. A method of serial synchronous data communication,
- with data communication equipment having a master device (2) comprising an arithmetic and logic unit and a master interface (22), and having a slave device (4) comprising an arithmetic and logic unit and a slave interface (24), wherein the master and slave interfaces (22, 24) are connected via two unidirectional data transmission lines (Data-In; Data-Out), an acknowledge signal line (Ready) and a clock signal line (Clock), with the following method steps:
- (1) master initiates communication, by transmitting a first transmit bit (SBit1),
- (2) slave receives first transmit bit (SBit1) after a master-slave transmission delay (Tms),
- (3) master enables the clock signal (N-CLOCK) after clock signal delay time (Tdc),
- (4) slave then receives an interrupt signal from the clock signal line (Clock, CLK) after master-slave transmission delay (Tms), transmits a first receive bit (RBit1) and reads first transmit bit (SBit1) after application of an interference suppression measure,
- (5) master receives first receive bit (RBit1) after slave-master transmission delay (Tsm),
- (6) slave enables its acknowledge signal (RDY) after delay time (Tdr),
- (7) master receives the acknowledge signal (N-READY)after slave-master transmission delay (Tsm), disables the clock signal (N-CLOCK), initiates a new cycle by transmitting the next transmit bit (SBit2) and reads the receive bit (RBit1) after applying an interference suppression measure,
- (8) slave receives next transmit bit (SBit2) and the disabled clock signal (RDY) after a master-slave transmission delay (Tms),
- (9) master enables the clock signal (N-CLOCK) after clock signal delay time (Tdc)
- (10) master disables the acknowledge signal (N-READY) after slave-master transmission delay (Tsm),
- (11) slave receives the active clock signal (CLK) after master-slave transmission delay (Tms), transmits next receive bit (RBit2) and reads transmit bit (SBit2) after applying an interference suppression measure,
- (12) master receives receive bit (RBit2) after slave-master transmission delay (Tsm),
- (13) slave enables its acknowledge signal (RDY) after delay time (Tdr),
- (14) master receives the acknowledge signal (N-READY) after slave-master transmission delay (Tsm), disables the clock signal (N-CLOCK), transmits next transmit bit (SBit3) and reads receive bit (RBit2) after applying an interference suppression measure,
- repetition of steps (7) - (13) until penultimate cycle,
- (15) master initiates last cycle, by transmitting last transmit bit (SBitn), and disables the clock signal (N-CLOCK) and reads receive bit (Rbitn-1) of the previous cycle after applying an interference suppression measure,
- (16) slave receives last transmit bit (SBitn) and the disabled clock signal (RDY) after a master-slave transmission delay (Tms),
- (17) master enables the clock signal (N-CLOCK) after clock signal delay time (Tdc)
- (18) master disables the acknowledge signal (N-READY) after slave-master transmission delay (Tsm),
- (19) slave receives the enabled clock signal (CLK) after master-slave transmission delay (Tms), transmits last receive bit (RBitn) and reads last transmit bit (SBitn) after applying an interference suppression measure,
- (20) master receives last receive bit (RBitn) after slave-master transmission delay (Tsm),
- (21) slave enables its acknowledge signal (RDY) after delay time (Tdr),
- (22) master receives the acknowledge signal (N-READY) after slave-master transmission delay (Tsm), sets the clock signal (N-CLOCK) to an inactive idle level, and reads last receive bit (RBitn) after applying an interference suppression measure,
- (23) slave disables its transmission line (DATAIN) after master-slave transmission delay (Tms),
- (24) master disables clock signal (N-CLOCK) after reading the last receive bit (RBitn),
- (25) slave disables clock signal (CLK) after master-slave transmission delay (Tms),
- (26) master disables its acknowledge signal (N-READY) after slave-master transmission delay (Tsm).

## Revendications

1. Equipement de transmission de données pour une transmission de données synchrone sérielle,
- avec un dispositif maître (2) comprenant une unité de calcul et une interface maître (22), et
- avec un dispositif esclave (4) comprenant une unité de calcul et une interface esclave (24),
- dans lequel les interfaces maître et esclave (22, 24) peuvent être liées sur au moins une ligne de transmission de données et une ligne de signal d'horloge, et
- les interfaces maître et esclave (22, 24) sont constituées de telle sorte qu'elles puissent être liées sur une ligne de signal de reconnaissance additionnelle (Ready) pour transmettre un signal de reconnaissance depuis le dispositif esclave jusqu'au dispositif maître (4, 2),
- l'unité de calcul du dispositif esclave (4) est constituée de telle sorte que, après achèvement d'une lecture de données, le signal de reconnaissance peut être envoyé sur le dispositif maître (2),
**caractérisé en ce que** l'unité de calcul du dispositif esclave (4) est constituée de telle sorte que :
• un signal de données constitué d'un bit (RBit) peut être généré après lecture de données et après achèvement d'un processus de suppression d'interférence d'un signal de reconnaissance (RDY) du dispositif maître (2) lors du raccordement de reconnaissance de l'interface esclave (24) ; et
• l'unité de calcul du dispositif maître (2) est constituée de telle sorte que :
• après réception du signal de reconnaissance (RDY) depuis le dispositif esclave (4) et après achèvement d'un processus de suppression d'interférence depuis le dispositif maître (2), un processus d'envoi supplémentaire est applicable au dispositif esclave (4).

2. Equipement de transmission de données selon la revendication 1, **caractérisé en ce qu'**un seul dispositif de transmission de données bidirectionnel est prévu.

3. Equipement de transmission de données selon la revendication 1, **caractérisé en ce que** deux dispositifs de transmission de données unidirectionnels (Data-Out, Data-In) sont prévus.

4. Procédé pour une transmission de données synchrone série,
- avec un equipement de transmission de données avec un dispositif maître (2) comprenant une unité de calcul et à une interface maître (22), et avec un dispositif esclave (4) comprenant une unité de calcul et une interface esclave (24), dans lequel des interfaces maître et esclave (22, 24) sont reliées à deux dispositifs de transmission de données unidirectionnels (Data-In, Data-Out), une ligne de signal de reconnaissance (Ready) et une ligne de signal d'horloge (Clock), comprenant les étapes suivantes :
- (1) le maître introduit la communication, en envoyant un premier bit d'envoi (SBit1),
- (2) l'esclave reçoit le premier bit d'envoi (SBit1) après un retard de transfert maître-esclave (Tms),
- (3) le maître active un signal d'horloge (N-CLOCK) après un temps de retard (Tdc),
- (4) l'esclave reçoit, après un retard de transfert maître-esclave (Tms), un signal d'interruption depuis la ligne de signal d'horloge (Clock, CLK), envoie un premier bit de réception (RBit1) et lit un premier bit d'envoi (SBit1) après application d'une mesure de suppression d'interférence,
- (5) le maître reçoit le premier bit de réception (RBit1) après un retard de transfert esclave-maître (Tsm),
- (6) l'esclave active son signal de reconnaissance (RDY) après un temps de retard (Tdr),
- (7) le maître reçoit, après un retard de transfert esclave-maître (Tsm), le signal de reconnaissance (N-READY), désactive le signal d'horloge (N-CLOCK), initie un nouveau cycle effectué par l'envoi d'un bit d'envoi suivant (SBit2) et lit le bit de réception (RBit1) après application d'une mesure de suppression d'interférence,
- (8) l'esclave reçoit, après un retard de transfert maître-esclave (Tms), un bit d'envoi suivant (SBit2) ainsi que le signal d'horloge désactivé (RDY),
- (9) le maître active le signal d'horloge (N-CLOCK) après un temps de retard de signal d'horloge (Tdc),
- (10) le maître met dans l'état inactif le signal de reconnaissance (N-READY) après un retard de transfert esclave-maître (Tsm),
- (11) l'esclave reçoit, après un retard de transfert maître-esclave (Tms), le signal d'horloge actif (CLK), envoie un bit de réception suivant (RBit2) et lit un bit d'envoi (SBit2) après application d'une mesure de suppression d'interférence,
- (12) le maître reçoit un bit de réception (RBit2) après un retard de transfert esclave-maître (Tsm),
- (13) l'esclave active son signal de reconnaissance (RDY) après un temps de retard (Tdr),
- (14) le maître reçoit, après un retard de transfert esclave-maître (Tsm), le signal de reconnaissance (N-READY), désactive le signal d'horloge (N-CLOCK), envoie un bit d'envoi suivant (SBit3) et lit un bit de réception (RBit2) après application d'une mesure de suppression d'interférence,
- répétition des étapes (7)-(13) jusqu'à l'avant-dernier cycle,
- (15) le maître initie un dernier cycle pour lequel il envoie un dernier bit d'envoi (SBitn) et désactive le signal d'horloge (N-CLOCK) et lit, après application d'une mesure de suppression d'interférence, un bit de réception (RBitn-1) du cycle précédent,
- (16) l'esclave reçoit, après un retard de transfert maître-esclave (Tms), un dernier bit d'envoi (SBitn) ainsi que le signal d'horloge désactivé (CLK),
- (17) le maître active le signal d'horloge (N-CLOCK) après un temps de retard de signal d'horloge (Tdc),
- (18) le maître met dans l'état inactif le signal de reconnaissance (N-READY) après un retard de transfert esclave-maître (Tsm),
- (19) l'esclave reçoit, après un retard de transfert maître-esclave (Tms), le signal d'horloge actif (CLK), envoie un dernier bit de réception (RBitn) et lit un dernier bit d'envoi (SBitn) après application d'une mesure de suppression d'interférence,
- (20) le maître reçoit un dernier bit de réception (RBitn) après un retard de transfert esclave-maître (Tsm),
- (21) l'esclave active son signal de reconnaissance (RDY) après un temps de retard (Tdr),
- (22) le maître reçoit, après un retard de transfert esclave-maître (Tsm), le signal de reconnaissance (N-READY), place le signal d'horloge (N-CLOCK) dans un niveau de repos inactif et lit un dernier bit de réception (RBitn) après application d'une mesure de suppression d'interférence,
- (23) l'esclave met dans l'état inactif sa ligne de transfert (DATAIN) après un retard de transfert esclave-maître (Tsm),
- (24) le maître désactive le signal d'horloge (N-CLOCK) après lecture du dernier bit de réception (RBitn),
- (25) l'esclave désactive le signal d'horloge (CLK) après un retard de transfert maître-esclave (Tms), et
- (26) le maître désactive son signal de reconnaissance (N-READY) après un retard de transfert esclave-maître (Tsm).
